# EUROPEAN PATENT APPLICATION

(11) **EP 2 410 173 A2**
(43) Date of publication of application: **25.01.2012**
(21) Application number: 11405288.9
(22) Date of filing: 18.07.2011
(51) Int. Cl.: F03D 3/04

(54) **Vertical axis wind turbine**

(30) Priority: 20.07.2010 AR P000102666
(71) Applicant: Julia, Silvestre Egidio, 7600 Mar del Plata (AR); Roth, Jörg Walter, 3065 Bolligen (CH)
(72) Inventor: The designation of the inventor has not yet been filed
(74) Representative: Gygi, Andreas

(57) **Abstract**

The invention relates to a vertical axis wind turbine, comprising:
a) a rotor including several blades connected to the vertical axis, such that kinetic energy of wind causes rotation of the vertical axis; and
b) a fairing surrounding the rotor at least partly.

## Description

### Technical Field

The invention relates to a vertical axis wind turbine with perimeter fairing.

### Background Art

A wind turbine converts kinetic energy from the wind into mechanical energy in order to drive an electric generator or other machinery, such as for grinding grain or pumping water. Wind turbines can rotate about a horizontal or a vertical axis, wherein the former is more common. Modern horizontal axis wind turbines have a supporting tower for a turbine with 3 blades and an electric generator. Vertical axis wind turbines have the main rotor shaft arranged vertically. Examples of vertical axis wind turbines are Darrieus turbines, Giromill turbines, Savonius wind turbines.

Presently known wind turbines operate at wind speeds of about 8-10m/s (29-36km/h) to 20m/s (72km/h). Wind turbines with a capacity of up to 10 MW. Heights of 160m and a rotor diameter of 145 m (horizontal axis) or heights of 230 m and 260 m rotor diameter (vertical axis) are known.

The installation of wind turbines is complex. At higher wind speeds above 22-25m/s (75-90km/h), the wind turbines have to be stopped completely. At low wind speeds below 8-10m/s (29-36km/h) the wind turbines do not operate.

### Summary of the invention

It is the object of the invention to create a wind turbine pertaining to the technical field initially mentioned, that operates in a wider range of wind speeds and that is simple in installation.

The solution of the invention is specified by the features of the independent claim. According to the invention a vertical axis wind turbine comprises:
a) a rotor including several blades connected to the vertical axis, such that kinetic energy of wind causes rotation of the vertical axis; and
b) a perimeter fairing surrounding the rotor at least partly.

The perimeter fairing may include several gates, for example eight gates, which can be regulated and oriented to the wind, for example to four winds. The perimeter fairing has the function of accelerating the wind to a double speed, due to the big diameter of the entrance gate to the rotor. This deposits the accelerated wind directly onto the blades of the rotor not allowing the wind to escape unit it gets to the other gate, where it leaves, thus achieving great efficiency.

The large diameter of this asynchronous generator allows to generate electricity without any kind of revolutions multiplier, which avoids to have many mechanisms in movement.

The vertical axis wind turbine according to the invention produces less noise than formerly known wind turbines. Moreover, the wind turbine according to the invention is less dangerous for animals, in particular birds.

Preferably, the rotor and the fairing are essentially cylindrical structures.

In a preferred embodiment, the fairing includes one or more entrance gates that can be regulated and oriented.

Preferably, the rotor has a diameter of 4m to 150m and a height of 2m to 150m.

In a preferred embodiment, the rotor includes 2 blades to 60 blades, which are from 20cm to 4m wide and from 2m to 150m high.

Other advantageous embodiments and combinations of features come out from the detailed description below and the totality of the claims.

### Brief description of the drawings

The drawings used to explain the embodiments show:

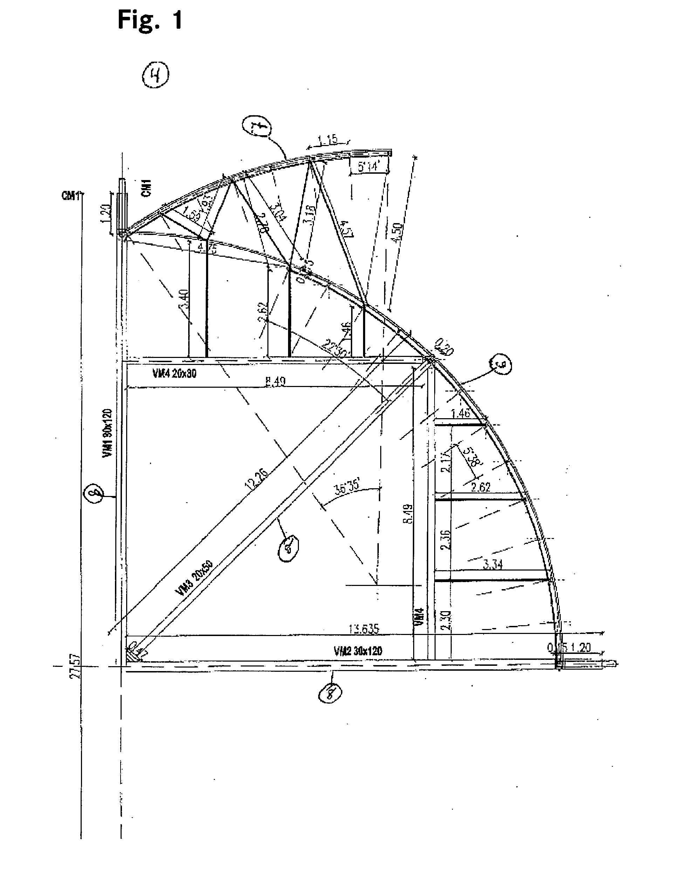

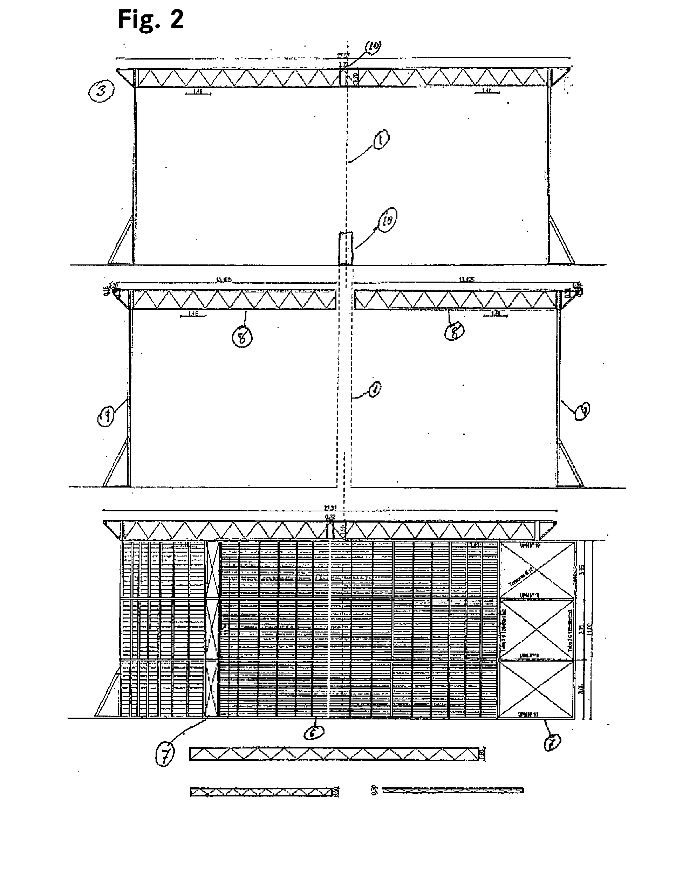

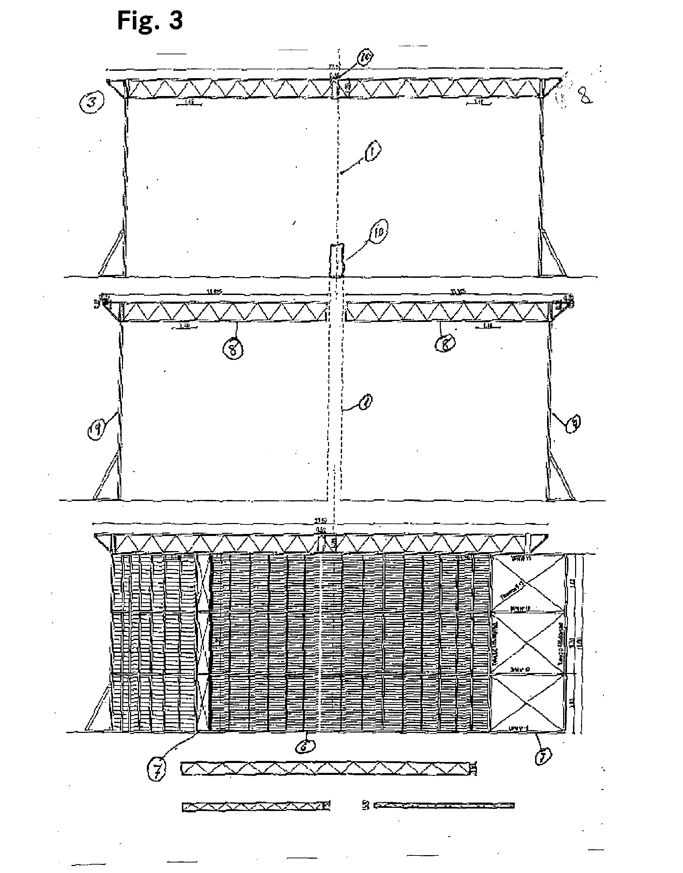

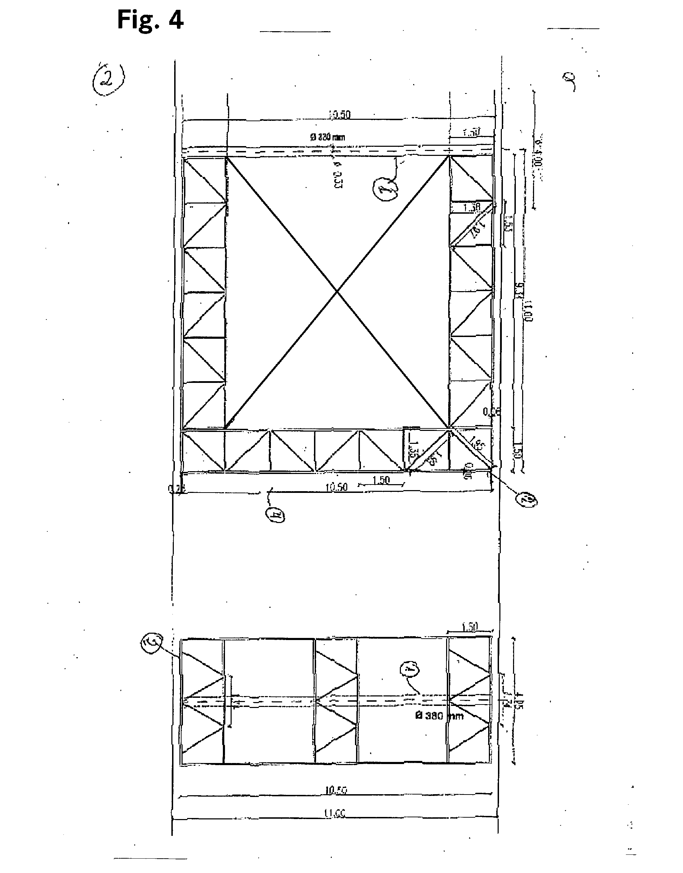

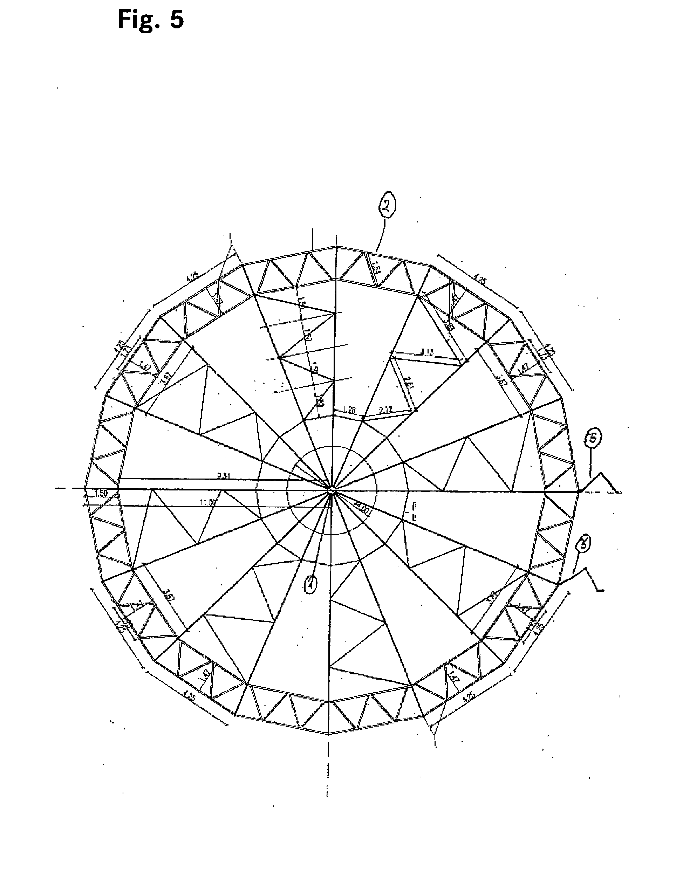

- Fig. 1 - 5: various aspects of the vertical axis wind turbine according to the invention.

In the figures, the same components are given the same reference symbols.

### Preferred embodiments

Fig. 1 - 5 show various aspects of the vertical axis wind turbine according to the invention.

Its novel design consists of a vertical axis mounted over two bearings, located one at the top and the other one at the lower part of the main axis. This main axis may be between 2 meters and 150 meters high. Arms are attached to this axis, and these arms hold vertical blades. The arms which are attached to the vertical axis may have from 2 meters to 75 meters each (this results in a circumference between 4 meters and 150 meters). The vertical blades are for frontal air load. This invention is characterized by having a fixed perimeter careening with eight gates of wind load which accelerate the wind speed to the double. In addition, these gates can be regulated by the axis speed: when the revolutions of the main axis become high the gates which allow the wind entrance to the turbine begin to close. This novel eolic turbine has a generator whose winding is attached to the base where the lower bearing of the main axis is located.

The other part of the generator consists of permanent magnets attached to the rotor which is the part of the turbine that rotates. Its wide diameter allows the generator to generate electricity even at low axis revolutions because the angular speed of the generator is high due to its diameter.

This novel design can also be used to extract water by attaching a hydraulic pump directly to the main axis and transporting it by mechanical energy.

In summary, it is to be noted that a vertical axis wind turbine has been presented that can be operated at low wind speeds and at high wind speeds.

## Claims

1. Vertical axis wind turbine, comprising:
a) a rotor including several blades connected to the vertical axis, such that kinetic energy of wind causes rotation of the vertical axis; and
b) a fairing surrounding the rotor at least partly.

2. Turbine according to claim 1, **characterized in that** the rotor and the fairing are essentially cylindrical structures.

3. Turbine according to claim 1 or 2, **characterized in that** the fairing includes one or more entrance gates that can be regulated and oriented.

4. Turbine according to one of claims 1 to 3, **characterized in that** the rotor has a diameter of 4m to 150m and a height of 2m to 150m.

5. Turbine according to one of claims 1 to 4, **characterized in that** the rotor includes 2 blades to 60 blades, which are from 20cm to 4m wide and from 2m to 150m high.
